# EUROPEAN PATENT APPLICATION

(11) **EP 4 683 197 A1**
(43) Date of publication of application: **21.01.2026**
(21) Application number: 25185365.1
(22) Date of filing: 26.06.2025
(51) Int. Cl.: H02M 1/32, H02M 1/36, H02M 1/42

(54) **AC/DC CONVERTER, METHOD OF CONTROLLING AN AC/DC CONVERTER AND COMPUTER PROGRAM PRODUCT**

(30) Priority: 16.07.2024 JP 2024113060
(71) Applicant: MAZDA MOTOR CORPORATION, Hiroshima 730-8670 (JP)
(72) Inventor: Lung, Chienru, Fuchu-cho, Aki-gun 730-8670 (JP)
(74) Representative: Müller-Boré & Partner Patentanwälte PartG mbB

(57) **Abstract**

[Problem] An inrush current is made effectively inhibitable by simple and inexpensive means.

[Means for Solution] An AC/DC converter 6 including a PFC circuit 20 is provided. The PFC circuit 20 includes: a reactor Lᵢₙᵥ; two thyristors SR1 and SR2 including first and second thyristors; switching elements S1 and S2; and a capacitor C_{dc}. When an input of an alternating-current voltage e_{ac} is started, with the functions of the switching elements S1 and S2 being made inactive, a controller 14 executes a soft start by adjusting a pulse width at a time when each of the thyristors SR1 and SR2 is turned ON by changing a timing when each of the thyristors SR1 and SR2 is turned ON based on phase angles θ_{ac.x} and θ_{ac.y}, which are obtained by processing the alternating-current voltage e_{ac} by predetermined phase synchronization circuit 43a and 43b.

## Description

### [Technical Field]

A disclosed technique relates to an AC/DC (alternating current (AC) and direct current (DC)) converter that is suitable for a vehicle-mounted charger and includes a PFC (power-factor correction) circuit.

### [Background Art]

In recent years, vehicles that travel using electric power such as hybrid vehicles and electric automobiles are becoming widely popular. On this kind of vehicle, a high-voltage battery is mounted as a power source for traveling of the vehicle. In order to charge the battery by connecting it to an external charging facility, a charger (so-called OBC: onboard charger) is mounted on the vehicle.

For example, such a vehicle-mounted charger performs a process of converting alternating-current power output from the external charging facility into direct-current power adapted to the battery. A vehicle-mounted charger is required to be adaptive to a high voltage and a large current and also required to have features such as a small size, high efficiency, and low loss.

In general, in order to improve a power factor, a PFC circuit is implemented in a vehicle-mounted charger (for example, reference numeral 440 in FIG. 2 of Patent Literature 1). In order to inhibit a large current (so-called inrush current) which might instantaneously flow at a start of charging, the circuit in Patent Literature 1 is provided with a precharge circuit (inrush current prevention circuit 420) which is configured such that a resistance and a relay are connected in parallel.

This kind of precharge circuit tends to have a large size. Thus, the precharge circuit does not satisfy the demand for reduction in the size of a vehicle-mounted charger. In addition, the relay might be degraded over time and cause failure.

To handle such a situation, a circuit has been proposed that can avoid such trouble and inhibit the inrush current by using a semiconductor element. For example, Patent Literature 2 discloses a rectifier circuit in which a first series circuit formed with two thyristors, a second series circuit formed with two transistors with which diodes are connected in antiparallel, and a capacitor are connected in parallel, a middle point of the second series circuit is connected with one side of an alternating-current power source via a reactor, and a middle point of the first series circuit is connected with the other side of the alternating-current power source.

In the rectifier circuit of Patent Literature 2, the thyristors are switched and the timings of turning ON and OFF of the transistors are controlled in accordance with positivity and negativity of an alternating-current voltage, thereby adjusting the magnitude of an input current. At an activation, the inrush current is inhibited by controlling a firing phase of each of the thyristors.

However, in a technique like Patent Literature 2, if a frequency of alternating-current power fluctuates, there can be a case where a difference occurs between an actual value of an alternating-current voltage value at the start of firing and an expected value (false firing). If a false firing occurs, inhibition of the inrush current might become insufficient. Patent Literature 3 discloses a technique for preventing a false firing.

Specifically, in the technique in Patent Literature 3, a zero-crossing point at which a voltage value of an alternating-current voltage is zero is detected, and the timing of firing of a thyristor is controlled with the zero-crossing point serving as a base point. Furthermore, if a frequency of alternating current power has fluctuated, control is performed such that the firing of the thyristor is not performed in a predetermined period with respect to the zero-crossing point as the base point until the frequency returns to a normal frequency.

### [Citation List]

### [Patent Literature]

[Patent Literature 1] JP 2017- 103 976 A
[Patent Literature 2] JP H01-164 273 A
[Patent Literature 3] JP 2020- 028 160 A

### [Summary of Invention]

### [Problems to be Solved by the Invention]

The technique of Patent Literature 3 requires a zero-crossing point to be detected. However, in the case of a commercial power supply, there can be a case where a distortion factor of its alternating-current voltage is high. When the distortion factor of the alternating-current voltage is high, an error is likely to occur in detection of the zero-crossing point. Thus, the timing of firing of a thyristor is likely to deviate and inhibition of an inrush current might become insufficient.

Further, in the technique of Patent Literature 3, a series of control procedures is executed in accordance with fluctuations in a frequency of an alternating current. Thus, there is a disadvantage of chattering being likely to occur. In a case where the distortion factor of a harmonic is high, malfunction is particularly likely to arise.

Accordingly, the present specification discloses a technique that can appropriately handle a case where a distortion factor of a voltage of a commercial power supply is high and that can solve the foregoing problems by simple and inexpensive means.

### [Means for Solving the Problems]

A disclosed technique relates to an AC/DC converter including a PFC circuit.

The PFC circuit includes: one reactor; two thyristors including first and second thyristors whose turning ON and OFF is switched in accordance with alternately repeated positive and negative half-cycles of an alternating-current voltage being input; at least one switching element that includes a diode, such as e.g. a freewheel diode, and is turned ON and OFF to convert the alternating-current voltage into a predetermined direct-current voltage and to output the predetermined direct-current voltage; and one capacitor that is arranged between a pair of pieces of direct-current output wiring on an output side relative to the reactor, the thyristors, and the switching element.

Further, a controller is provided which controls turning ON and OFF of the thyristors and the switching element. When an input of the alternating-current voltage is started, with a function of the switching element being made inactive, the controller executes a soft start by adjusting a pulse width at a time when each of the thyristors is turned ON by changing a timing when each of the thyristors is turned ON based on a phase angle, which is obtained by processing the alternating-current voltage by a predetermined phase synchronization circuit.

That is, in such an AC/DC converter, when the input of the alternating-current voltage is started, with the function of the switching element being made inactive, the controller adjusts the pulse width at a time when each of the thyristors is turned ON by changing the timing when each of the thyristors is turned ON based on the phase angle, which is obtained by processing the alternating-current voltage by the predetermined phase synchronization circuit.

Since the phase angle is obtained by processing the alternating-current voltage by the phase synchronization circuit, it is possible to obtain a precise phase angle that always follows a phase of the alternating-current voltage being input. Consequently, even when a frequency fluctuates to some extent as in a commercial power supply, control can appropriately be performed. Furthermore, because the pulse width at a time when each of the thyristors is turned ON, in other words, a conducting time, is adjusted based on the phase angle, a soft start can appropriately be executed. An inrush current can effectively be inhibited.

In addition, since execution can be performed through ON-OFF control by an I/O pin, a control program is simple and can be implemented by using an inexpensive control microcomputer.

Specifically, the phase synchronization circuit may be configured with: a first phase synchronization circuit corresponding to a reverse phase of the alternating-current voltage; and a second phase synchronization circuit corresponding to a normal phase of the alternating-current voltage, and the controller may include: a first comparator that compares a first phase angle which is output from the first phase synchronization circuit with a comparison phase angle which is set in advance for execution of the soft start, and that outputs a first control signal; and a second comparator that compares a second phase angle which is output from the second phase synchronization circuit with the comparison phase angle and that outputs a second control signal may control turning ON and OFF of the second thyristor based on the first control signal, and may control turning ON and OFF of the first thyristor based on the second control signal.

Because the transfer function and the phase synchronization circuit are provided for each of the phases, even when the alternating-current voltage changes at each half cycle to the normal phase in which the voltage is positive and the reverse phase in which the voltage is negative, each of them can be appropriately handled. Consequently, a soft start can appropriately be executed. The inrush current can effectively be inhibited.

The controller may include: a first transfer function that converts a distorted wave of the alternating-current voltage into a sinusoidal wave in the reverse phase; and a second transfer function that converts the distorted wave of the alternating-current voltage into a sinusoidal wave in the normal phase, the first phase synchronization circuit may output the first phase angle based on a reverse-phase alternating-current voltage which is obtained by the first transfer function, and the second phase synchronization circuit may output the second phase angle based on a normal-phase alternating-current voltage which is obtained by the second transfer function.

Even in a case where the alternating-current voltage is distorted, the alternating-current voltage can be converted to a sinusoidal wave with no distortion by each of the transfer functions. Since the phase angle is then obtained based on the smooth alternating-current voltage, it is possible to appropriately handle even a case where a distortion factor of the alternating-current voltage is high. Consequently, the soft start can appropriately be executed. The inrush current can effectively be inhibited.

The controller may include a first transfer function that converts a distorted wave of the alternating-current voltage into a sinusoidal wave in the reverse phase, the first phase synchronization circuit may output the first phase angle based on a reverse-phase alternating-current voltage which is obtained by the first transfer function, and the second phase synchronization circuit may output the second phase angle based on a normal-phase alternating-current voltage which is obtained by inverting the reverse-phase alternating-current voltage obtained by the first transfer function.

Since this allows one transfer function to be dispensed with, the control program can be simplified. Processing load on the controller can be reduced.

The disclosed technique can also be applied to a three-phase alternating-current voltage.

That is, the alternating-current voltage may be configured with three phases that are different phases, the PFC circuit may include: the reactor; three thyristors including first, second, and third thyristors whose turning ON and OFF is switched in accordance with alternately repeated positive and negative half-cycles of the alternating-current voltage in the respective phases being input; three diodes including first, second, and third diodes that are connected in series with the respective thyristors, with conducting directions of the diodes being the same as conducting directions of the respective thyristors; the switching element; and the capacitor that is arranged between a pair of pieces of direct-current output wiring on an output side relative to the reactor, the thyristors, the diodes, and the switching element, and the controller may include: three phase synchronization circuits that correspond to the alternating-current voltage in the respective phases; and three comparators that are provided for the respective phases so as to compare phase angles which are output from the respective phase synchronization circuits with the comparison phase angle which is set in advance for execution of the soft start, and to output control signals, and may control turning ON and OFF of the first to third thyristors based on the control signals for the respective phases.

The AC/DC converter having such a configuration can appropriately perform a soft start and effectively inhibit the inrush current even for a three-phase alternating-current voltage.

The controller may include a gate driver to which an error amount of the alternating-current voltage obtained from the phase synchronization circuit is input together with the control signal and which outputs a drive signal to turn ON or OFF each of the thyristors, and the gate driver may not output the drive signal when an absolute value of the error amount of the alternating-current voltage is equal to or larger than a predetermined threshold value and may output the drive signal when the absolute value of the error amount of the alternating-current voltage is smaller than the threshold value.

Accordingly, the inrush current can effectively be inhibited, and ON-OFF control of each of the thyristors at the soft start can appropriately be executed.

According to a further aspect, there is provided a method of controlling an AC/DC converter comprising a PFC circuit, wherein the PFC circuit includes:
one reactor;
two thyristors including first and second thyristors whose turning ON and OFF is switched in accordance with alternately repeated positive and negative half-cycles of an alternating-current voltage being input;
at least one switching element that includes a diode and is turned ON and OFF to convert the alternating-current voltage into a predetermined direct-current voltage and to output the predetermined direct-current voltage; and
one capacitor that is arranged between a pair of pieces of direct-current output wiring on an output side relative to the reactor, the thyristors, and the switching element,
the method comprising turning ON and OFF the thyristors and the switching element, and
when an input of the alternating-current voltage is started, with a function of the switching element being made inactive, the method executes a soft start by adjusting a pulse width at a time when each of the thyristors is turned ON by changing a timing when each of the thyristors is turned ON based on a phase angle which is obtained by processing the alternating-current voltage by a predetermined phase synchronization circuit.

Preferably, the phase synchronization circuit is configured with:
a first phase synchronization circuit corresponding to a reverse phase of the alternating-current voltage; and
a second phase synchronization circuit corresponding to a normal phase of the alternating-current voltage, and
the method includes:
   comparing a first phase angle which is output from the first phase synchronization circuit with a comparison phase angle which is set in advance for execution of the soft start, and that outputs a first control signal; and
   comparing a second phase angle which is output from the second phase synchronization circuit with the comparison phase angle and that outputs a second control signal, and
   controlling turning ON and OFF the second thyristor based on the first control signal, and controlling turning ON and OFF the first thyristor based on the second control signal.

Further preferred the method includes:
converting a distorted wave of the alternating-current voltage into a sinusoidal wave in the reverse phase; and
converting the distorted wave of the alternating-current voltage into a sinusoidal wave in the normal phase,
wherein the first phase synchronization circuit outputs the first phase angle based on a reverse-phase alternating-current voltage which is obtained by converting a distorted wave of the alternating-current voltage into a sinusoidal wave in the reverse phase, and the second phase synchronization circuit outputs the second phase angle based on a normal-phase alternating-current voltage which is obtained by converting the distorted wave of the alternating-current voltage into a sinusoidal wave in the normal phase.

Preferably, the method further includes converting a distorted wave of the alternating-current voltage into a sinusoidal wave in the reverse phase,
wherein the first phase synchronization circuit outputs the first phase angle based on a reverse-phase alternating-current voltage which is obtained by converting a distorted wave of the alternating-current voltage into a sinusoidal wave in the reverse phase, and the second phase synchronization circuit outputs the second phase angle based on a normal-phase alternating-current voltage which is obtained by inverting the reverse-phase alternating-current voltage obtained by converting a distorted wave of the alternating-current voltage into a sinusoidal wave in the reverse phase.

Further preferred, the diode is formed as a freewheel diode.

According to a still further aspect, there is provided a computer program product which, when loaded on a suitable system, can perform the steps of any one of the above mentioned methods.

### [Advantageous Effects of Invention]

According to the disclosed technique, an inrush current can effectively be inhibited by simple and inexpensive means. Consequently, a compact AC/DC converter with high performance can inexpensively be realized.

### [Brief Description of Drawings]

FIG. 1 is diagram for explaining an application example (OBC On-Board Charger) of a disclosed technique (AC/DC converter).
FIG. 2 is a diagram illustrating examples of a PFC circuit which can be included in the AC/DC converter.
FIG. 3 is a conceptual diagram of a state change of a direct-current bus voltage at activation.
FIG. 4 is a control block diagram concerning control of thyristors.
FIG. 5 is a diagram for explaining a flow of a process by a first transfer function.
FIG. 6 is a control block diagram of a phase synchronization circuit.
FIG. 7 illustrates one example of setting information related to control for turning ON and OFF the thyristors.
FIG. 8 is a conceptual diagram of a time chart at activation.
FIG. 9 is a conceptual diagram of a time chart in a steady condition.
FIG. 10 is a control block diagram of the PFC circuit.
FIG. 11A is a diagram illustrating results of effect inspection by a simulation.
FIG. 11B is a diagram illustrating the results of effect inspection by the simulation.
FIG. 11C is a diagram illustrating the results of effect inspection by the simulation.
FIG. 12 is a diagram of another form of the AC/DC converter (a diagram corresponding to FIG. 4).
FIG. 13A is a diagram for explaining an example of application to a three-phase PFC circuit.
FIG. 13B is a diagram for explaining an example of application to a three-phase PFC circuit.

### [Mode for Carrying Out the Invention]

The disclosed technique will hereinafter be described. However, the following descriptions are merely exemplary in nature. Configuration elements of circuits are given alphanumeric reference characters identifying them, together with predetermined symbols. For convenience, there can be a case where explanations and illustrations are made by using only those symbols. A capital character symbol "I" or the like denotes its maximum value (amplitude value), and a lower-case character symbol "i" or the like denotes its instantaneous value.

### <AC/DC Converter>

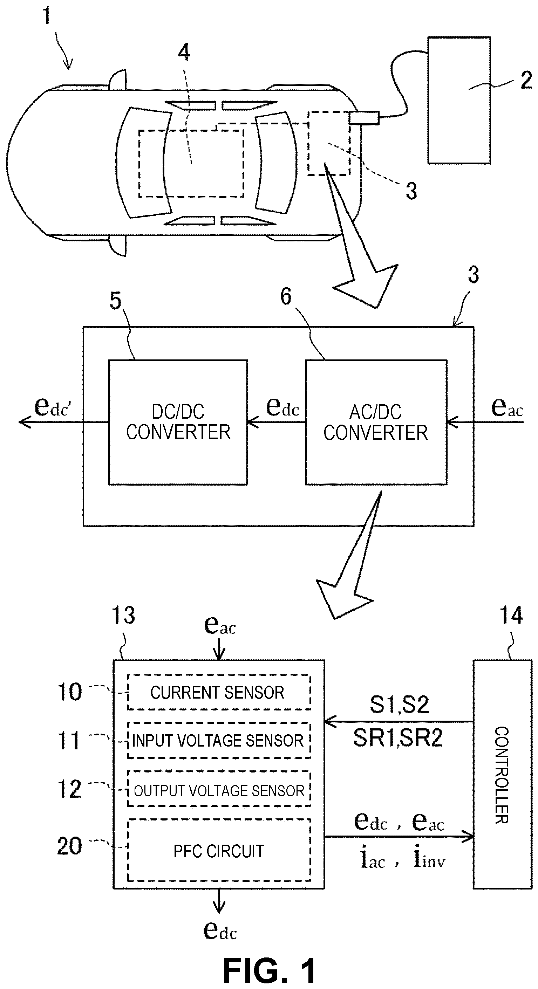

FIG. 1 illustrates a vehicle-mounted charger 3 (OBC) as a preferable application example of the disclosed technique (AC/DC converter). The vehicle-mounted charger 3 is preferably mounted on a vehicle 1 such as an electric automobile or a hybrid vehicle, preferably together with a battery 4 with a high output which is used as a power source for traveling.

In the upper diagram in FIG. 1, the vehicle 1 and a commercial power supply 2 during charging are illustrated. The commercial power supply 2 outputs an alternating-current commercial system voltage (alternating-current voltage e_{ac}) at a high voltage such as e.g. 100 V or e.g. 200 V. The commercial power supply 2 and the vehicle 1 are connected together by a cable, thereby performing charging of the battery 4. In this case, the vehicle-mounted charger 3 is interposed between the battery 4 and the commercial power supply 2 and converts the alternating-current voltage e_{ac} into a direct-current voltage e_{dc}' adapted to the battery 4.

As illustrated in the middle diagram in FIG. 1, the vehicle-mounted charger 3 is preferably configured with a DC/DC converter 5, an AC/DC converter 6, and so forth. The AC/DC converter 6 converts the input alternating-current voltage e_{ac} into a direct-current voltage e_{dc} and outputs that. The disclosed technique is applied to this AC/DC converter 6.

The DC/DC converter 5 is a device that converts a direct-current voltage into a different direct-current voltage. The DC/DC converter 5 converts the direct-current voltage e_{dc} resulting from conversion in the AC/DC converter 6 into a predetermined direct-current voltage e_{dc}' and outputs that to a side of the battery 4.

As illustrated in the lower diagram in FIG. 1, the AC/DC converter 6 includes preferably a converter mechanism 13, which includes a current sensor 10, an input voltage sensor 11, an output voltage sensor 12, a PFC (power-factor correction) circuit 20, and so forth, and a controller 14 which controls the converter mechanism 13. This controller 14 is an example of a "controller".

The current sensor 10 is preferably a sensor of a Hall element type. Two current sensors 10 may also be provided and installed at predetermined locations, such as in the converter mechanism 13 or in the PFC circuit 20 or in another suitable location. In case of two current sensors, a first current sensor may directly measure a value of an alternating current i_{ac} which is input to the AC/DC converter 6 and outputs the value to the controller 14, and a second current sensor may directly measure a value of a current (reactor current iᵢₙᵥ) which flows through a reactor 24 described later, for example, and outputs the value to the controller 14.

The input voltage sensor 11 and the output voltage sensor 12 are also installed in predetermined locations in the PFC circuit 20. The input voltage sensor 11 directly measures a value of the alternating-current voltage e_{ac} which is input from the commercial power supply 2 to the AC/DC converter 6 and outputs the value to the controller 14. The output voltage sensor 12 directly measures a value of the direct-current voltage e_{dc} (direct-current bus voltage e_{dc}) which is output from the AC/DC converter 6 and outputs the value to the controller 14.

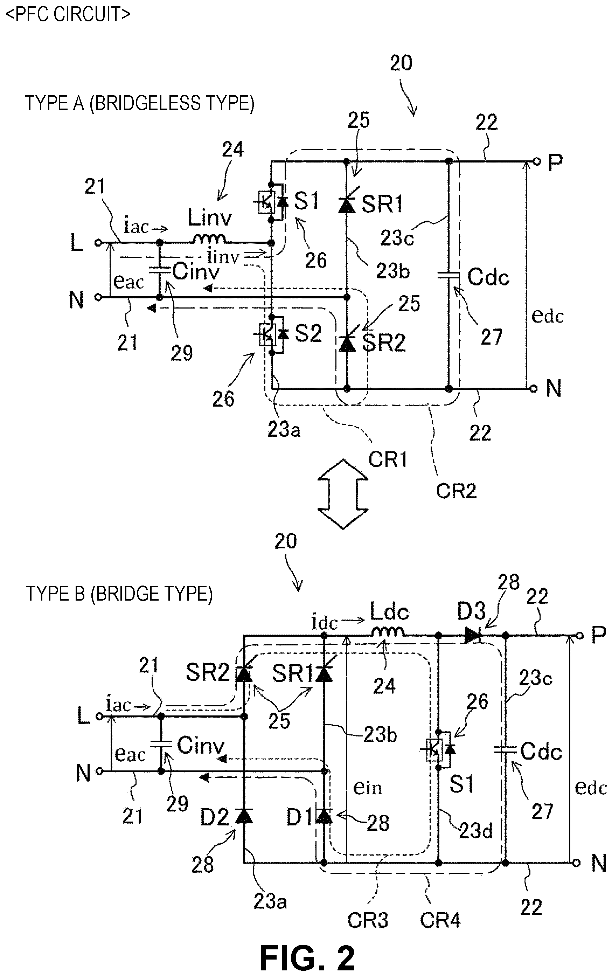

Based on those measured values, the controller 14 outputs drive signals to thyristors 25 (SR1 and SR2) and switching elements 26 (for example, S1 and S2) and controls turning ON and OFF of them. That is, these thyristors 25 and switching elements 26, as shown in Fig. 2, are switched at predetermined timings between a conducting state (ON) where a current flows and a non-conducting state (OFF) where no current flows.

### (PFC Circuit)

FIG. 2 illustrates, as examples, two PFC circuits 20 which can be included in the AC/DC converter 6. The PFC circuit 20 of a type A is of a bridgeless type. The PFC circuit 20 of a type B is of a bridge type. A basic structure is common to both of the PFC circuits 20.

That is, each of the PFC circuits 20 has a preferably pair of pieces of alternating-current input wiring 21 and 21, a pair of pieces of direct-current output wiring 22 and 22, a plurality of pieces of relay wiring 23 (23a and so forth) which connect portions between the pair of pieces of direct-current output wiring 22 and 22, one reactor 24, two thyristors 25 including first and second thyristors, at least one switching element 26, and one smoothing capacitor 27 which is arranged on an output side relative to the reactor 24, thyristors 25, and switching element 26.

The switching element 26 is preferably a power semiconductor device such as an IGBT and includes a diode (e.g. a freewheel diode) which is connected in antiparallel. The thyristor 25 is a commonly used electronic component as with the switching element 26, can retain the conducting state in a certain direction by being turned ON (so-called firing), and can be retained in the non-conducting state by being turned OFF (so-called turn-off).

The pair of pieces of direct-current output wiring 22 and 22 have, at their ends on the output side, a pair of output terminals (an N terminal on a grounding side and a P terminal on a non-grounding side) from which the direct-current bus voltage e_{dc} is output.

In the PFC circuit 20 of a bridgeless type, between the pair of pieces of direct-current output wiring 22 and 22, first relay wiring 23a in which two switching elements S1 and S2 as first and second switching elements are arranged in series, second relay wiring 23b in which two thyristors SR1 and SR2 are arranged in series, and third relay wiring 23c in which the smoothing capacitor 27 (C_{dc}) is arranged are in parallel arranged in this order from an input side toward the output side.

In the PFC circuit 20 of a bridge type, between the pair of pieces of direct-current output wiring 22 and 22, the first relay wiring 23a in which one thyristor 25 (SR2) and one diode 28 (D2) are arranged in series in this order from the non-grounding side, the second relay wiring 23b in which one thyristor 25 (SR1) and one diode 28 (D1) are arranged in series in this order from the non-grounding side, fourth relay wiring 23d in which one switching element 26 (S1) is arranged, and the third relay wiring 23c in which the smoothing capacitor 27 (C_{dc}) is arranged are in parallel arranged in this order from the input side toward the output side.

The pair of pieces of alternating-current input wiring 21 and 21 have, at their ends on the input side, a pair of input terminals (an N terminal on the grounding side and an L terminal on the non-grounding side) to which the alternating-current voltage e_{ac} is input. The other ends, on the output side, of the pair of pieces of alternating-current input wiring 21 and 21 are respectively connected with middle points of the first and second relay wiring 23a and 23b. Between the pair of pieces of alternating-current input wiring 21 and 21, a relay capacitor 29 (Cᵢₙᵥ) for the purpose of reducing noise is preferably connected. Note that the relay capacitor 29 is not necessarily required.

In a case of the PFC circuit 20 of a bridgeless type, the reactor 24 (Lᵢₙᵥ) is preferably arranged in a portion on the output side relative to the relay capacitor 29 in the alternating-current input wiring 21 on the non-grounding side. On the other hand, in a case of the PFC circuit 20 of a bridge type, the reactor 24 (L_{dc}) is preferably arranged in a portion between the second relay wiring 23b and the fourth relay wiring 23d in the direct-current output wiring 22 on the non-grounding side. In the case of the PFC circuit 20 of a bridge type, a third diode 28 (D3) is arranged in a portion between the fourth relay wiring 23d and the third relay wiring 23c in the direct-current output wiring 22 on the non-grounding side.

### (Action in Steady Condition)

In a steady condition of the AC/DC converter 6, the controller 14 performs control such that the direct-current bus voltage e_{dc} becomes substantially constant at a predetermined value. That is, in accordance with alternately repeated positive and negative half-cycles of an alternating-current voltage e_{ac}, turning ON and OFF of the first and second thyristors SR1 and SR2 are switched. Accordingly, turning ON and OFF of the corresponding switching elements S1 and S2 are controlled such that the direct-current bus voltage e_{dc} becomes constant at the predetermined value.

Specifically, for the PFC circuit 20 of a bridgeless type, in the positive half-cycle, the first thyristor SR1 is turned OFF and the second thyristor SR2 is turned ON. In this state, turning ON and OFF of the second switching element S2 are controlled. Although known in the art, a current path CR1 at a time when the second switching element S2 is turned ON and a current path CR2 at a time when the second switching element S2 is turned OFF in this case are illustrated in FIG. 2.

In the negative half-cycle, the first thyristor SR1 is turned ON, and the second thyristor SR2 is turned OFF. In this state, turning ON and OFF of the first switching element S1 are controlled. Current paths in this case are not illustrated.

For the PFC circuit 20 of a bridge type, in the positive half-cycle, the first thyristor SR1 is turned OFF and the second thyristor SR2 is turned ON. In this state, turning ON and OFF of the switching element S1 are controlled. Although known in the art, a current path CR3 at a time when the switching element S1 is turned ON and a current path CR4 at a time when the switching element S1 is turned OFF in this case are each illustrated.

In the negative half-cycle, the first thyristor SR1 is turned ON, and the second thyristor SR2 is turned OFF. In this state, turning ON and OFF of the switching element S1 are controlled. Current paths in this case are not illustrated.

### (Soft Start)

When the alternating-current voltage e_{ac} is input to the AC/DC converter 6 in response to activation, a large current flows into the PFC circuit 20 (so-called inrush current) in order to charge the smoothing capacitor C_{dc}. In related art, it is typical to implement a precharge circuit in an AC/DC converter in order to prevent this inrush current.

Because an amount of current that flows into the PFC circuit at the start of an input of the alternating-current voltage e_{ac} is restricted by the precharge circuit, the inrush current can be inhibited (soft start). For the precharge circuit, a precharge circuit in which a resistance and a relay are connected in parallel is common, in which case, however, its size is likely to be large. Further, the relay might be degraded over time and cause failure.

By contrast, in the AC/DC converter 6, a precharge circuit is configured by using the thyristors 25 for the PFC circuit 20. Note that the following description assumes that the AC/DC converter 6 includes the above-described PFC circuit 20 of a bridgeless type.

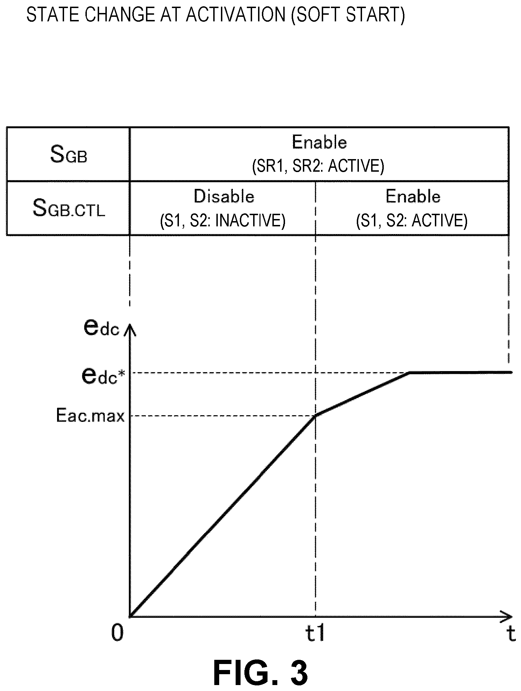

FIG. 3 illustrates, as an example, a state change of the direct-current bus voltage e_{dc} at an activation in which the soft start is executed. A time period from the start of activation to t1 corresponds to the soft start.

The table on the upper side represents settings of a first gate block signal (S_{GB}) and a second gate block signal (S_{GB.CTL}) which correspond to the state change of the direct-current bus voltage e_{dc}. The first gate block signal is a control signal for gate block of the two thyristors SR1 and SR2, and the second gate block signal is a control signal for gate block of the two switching elements S1 and S2.

During execution of the soft start, the first gate block signal is in an enabling state, and functions of the two thyristors SR1 and SR2 are active. After execution of the soft start, the first gate block signal is also in the enabling state, and the functions of the two thyristors SR1 and SR2 are active.

In contrast, during execution of the soft start, the second gate block signal is in a disabling state, and functions of the two switching elements S1 and S2 are made inactive. After execution of the soft start, the second gate block signal becomes the enabling state, and the functions of the two switching elements S1 and S2 become active.

Accordingly, when the input of the alternating-current voltage e_{ac} to the PFC circuit 20 is started, as described later in more detail, with the functions of the switching elements S1 and S2 being made inactive, the controller 14 changes a timing when each of the thyristors SR1 and SR2 is turned ON based on a phase angle which is obtained by processing the alternating-current voltage e_{ac} in a predetermined phase synchronization circuit, and thereby adjusts a pulse width at a time when each of the thyristors SR1 and SR2 is turned ON. The soft start is thereby executed.

Accordingly, the direct-current bus voltage e_{dc} gradually increases, and the smoothing capacitor Coc is steadily charged. Then, when the direct-current bus voltage e_{dc} reaches a maximum value (E_{ac.max}) of the alternating-current voltage e_{ac} (timing of t1), the soft start is finished.

When the soft start is finished, the respective functions of the two thyristors SR1 and SR2 and two switching elements S1 and S2 are made active, and they are driven. Through control by the controller 14, the direct-current bus voltage e_{dc} is boosted until the direct-current bus voltage e_{dc} reaches a direct-current bus voltage command value (e_{dc}*) as its target value. When the direct-current bus voltage command value is reached, the direct-current bus voltage e_{dc} is retained at the voltage value (steady state).

### (Control Block of Thyristors)

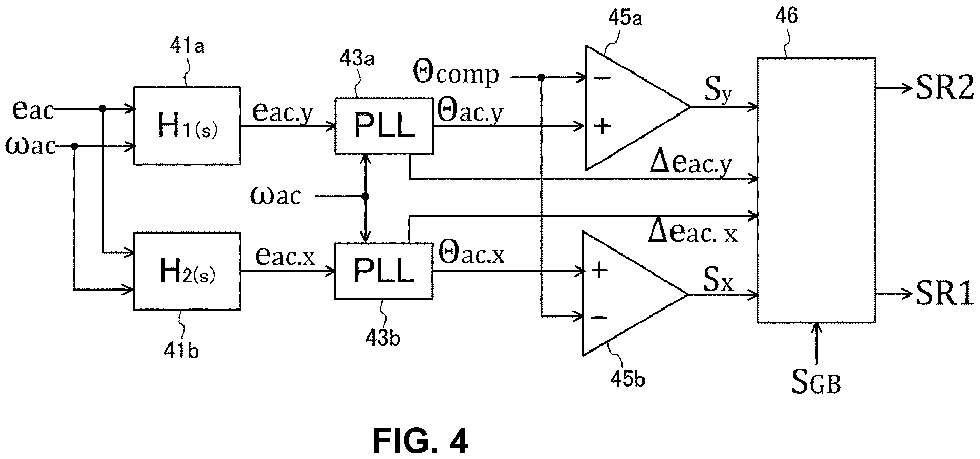

FIG. 4 illustrates one example of a control block concerning control of the thyristors SR1 and SR2, which is executed by the controller 14. The control block illustrated as an example is configured with a first transfer function 41a, a second transfer function 41b, first and second phase synchronization circuits 43a and 43b, a first comparator 45a, a second comparator 45b, a first gate driver 46 for the thyristors, and so forth.

Each of the first transfer function 41a and the second transfer function 41b is configured with a plurality of primary low-pass filters and so forth, for example. Furthermore, the first transfer function 41a converts a distorted wave of the alternating-current voltage e_{ac} into a sinusoidal wave in a reverse phase. Accordingly, a signal of the alternating-current voltage e_{ac} in the reverse phase and with no distortion is formed.

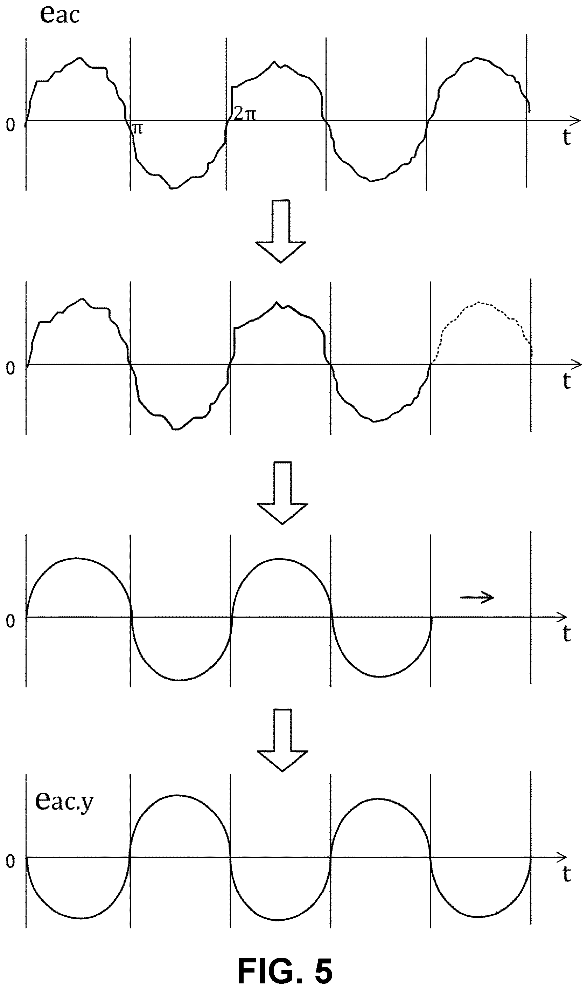

FIG. 5 illustrates, as an example, a flow of a process by the first transfer function 41a. As illustrated in the upper diagram in FIG. 5, a waveform of the alternating-current voltage e_{ac} to be input to the AC/DC converter 6 is often distorted due to influence such as noise (distorted wave). When its distortion factor is high, a determination about a zero-crossing point or the like is influenced and it is difficult to appropriately execute control.

Accordingly, so that the influence of distortion can be eliminated, the AC/DC converter 6 processes the alternating-current voltage e_{ac} by using the first transfer function 41a such that the alternating-current voltage e_{ac} has a waveform with no distortion (sinusoidal wave). Specifically, as illustrated in FIG. 4, the alternating-current voltage e_{ac} and its angular frequency (ω_{ac}) are input to the first transfer function 41a.

Furthermore, as illustrated in the middle diagram in FIG. 5, a process is executed by the first transfer function 41a on a portion (solid line portion) whose phase is delayed by 180 degrees with respect to the alternating-current voltage e_{ac} to be input. Accordingly, as illustrated in a lower diagram in FIG. 5, a signal of the alternating-current voltage e_{ac}, which is formed with a sinusoidal wave whose phase is reverse (reverse phase) to the alternating-current voltage e_{ac} to be input, is obtained. Here, this is assumed to be a waveform of the alternating-current voltage e_{ac} with no phase delay. By doing so, a sinusoidal wave (e_{ac.y}), whose phase is reverse (reverse phase) to the alternating-current voltage e_{ac} to be actually input, is obtained (here, the reverse phase is distinguished by adding y).

In a similar manner, the second transfer function 41b converts the distorted wave of the alternating-current voltage e_{ac} into a sinusoidal wave whose phase is the same (normal phase). For example, a process may be executed by the second transfer function 41b on a portion whose phase is delayed by about 360 degrees with respect to the alternating-current voltage e_{ac} to be input. Accordingly, a signal (e_{ac.x}) of the alternating-current voltage e_{ac}, which is formed with a sinusoidal wave in the normal phase whose phase is the same as the alternating-current voltage e_{ac} to be actually input, is obtained (here, the normal phase is distinguished by adding x).

The first phase synchronization circuit 43a corresponds to the alternating-current voltage e_{ac} in the reverse phase, and the second phase synchronization circuit 43b corresponds to the alternating-current voltage e_{ac} in the normal phase. The first phase synchronization circuit 43a outputs a first phase angle θ_{ac.y} based on a signal e_{ac.y} of the alternating-current voltage in the reverse phase, which is obtained by the first transfer function 41a, and the angular frequency ω_{ac} of the alternating-current voltage e_{ac}. The second phase synchronization circuit 43b outputs a second phase angle θ_{ac.x} based on the signal e_{ac.x} of the alternating-current voltage in the normal phase, which is obtained by the second transfer function 41b, and the angular frequency ω_{ac} of the alternating-current voltage e_{ac}.

These phase synchronization circuits 43a and 43b synchronize the signals e_{ac.x} and e_{ac.y} of the alternating-current voltage in the normal phase and reverse phase with a phase of the alternating-current voltage e_{ac} to be input to the AC/DC converter 6 and output their phase angles θ_{ac.x} and θ_{ac.y}. Consequently, precise phase angles θ_{ac.x} and θ_{ac.y} can be obtained.

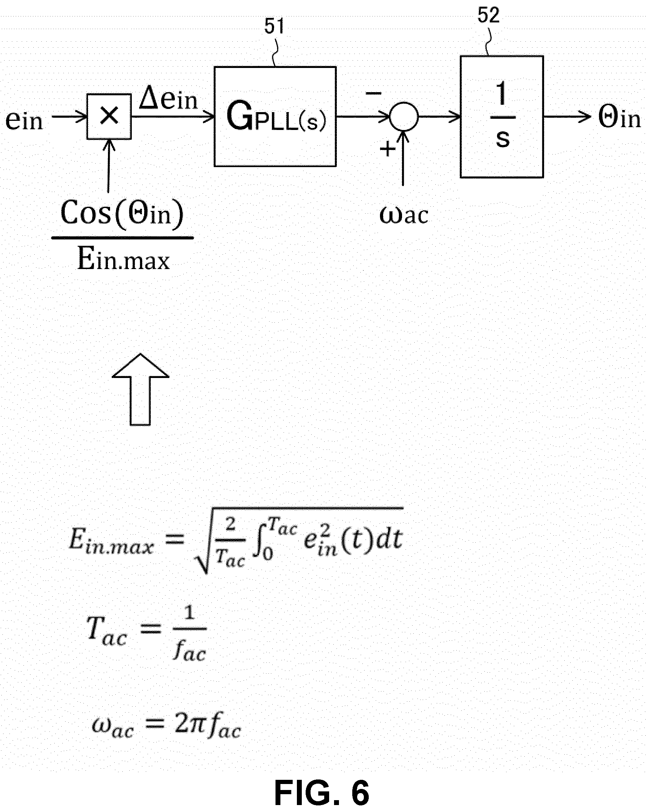

FIG. 6 illustrates a control block of those phase synchronization circuits 43a and 43b. The control block is configured with a transfer function 51 composed of a predetermined low-pass filter, an integration element 52, and so forth. Note that because contents of the control block are the same except a difference between the normal phase and the reverse phase being processed, for convenience, their reference characters "ac.x, ac.y" will be substituted and represented by "in".

A signal (eᵢₙ) of the alternating-current voltage in the normal phase and reverse phase to be input to the phase synchronization circuits 43a and 43b is obtained by multiplication expressed as Cos(θᵢₙ)/E_{in.max}, which is a predetermined feedback value related to the phase angle. Accordingly, an error amount (Δₑᵢₙ) of the alternating-current voltage is obtained and is processed by the transfer function 51.

Here, eᵢₙ corresponds to E_{in.max}*Sin(θₐ). Note that θₐ denotes the phase angle of the alternating-current voltage e_{ac} (θₐ denotes a phase angle of an actual commercial system voltage and an actual phase angle). Consequently, by multiplying eᵢₙ by the feedback value, Sᵢₙ(θₐ)*Cos(θ) can be obtained. This corresponds to Δeᵢₙ. Furthermore, when θₐ = θ holds, a phase-locked state is established, alternating-current components are cut by the transfer function 51, and a direct-current component, that is, a deviation value (angular frequency deviation value) between an angular frequency of the actual commercial system voltage and an angular frequency (fixed angular frequency) ω_{ac} of a set commercial system voltage is output.

After an output value (angular frequency deviation value) of the transfer function 51 is subtracted from the fixed angular frequency ω_{ac}, this value is processed by the integration element 52. A resulting phase angle θᵢₙ is output from the phase synchronization circuit 43a. The feedback value can be obtained from the phase angle θᵢₙ and expressions indicated on a lower side in FIG. 6. Note that T_{ac} denotes a period of the alternating-current voltage e_{ac}, and f_{ac} denotes a frequency of the alternating-current voltage e_{ac}.

As illustrated in FIG. 4, the first comparator 45a compares the first phase angle θ_{ac.y} output from the first phase synchronization circuit 43a with a comparison phase angle (θ_{comp}) and outputs a first control signal Sy to the first gate driver 46. The comparison phase angle is a set value which is set in advance for execution of the soft start and is implemented in a memory of the controller 14.

The comparison phase angle is set to constantly change from 2π side toward π side in a range (conduction width) of about 180 degrees (π) or larger to about 360 degrees (2π) or smaller. As described later, a timing to turn ON each of the thyristors SR1 and SR2 is determined based on the comparison phase angle, the pulse width at a time when each of the thyristors SR1 and SR2 is turned ON is adjusted. A time corresponding to the conduction width in execution of the soft start may appropriately be set when circuit constants are designed. For example, the time corresponding to the conduction width may be set as one second.

Similarly, the second comparator 45b compares the second phase angle θ_{ac.x} output from the second phase synchronization circuit 43b with the comparison phase angle and outputs a second control signal Sx to the first gate driver 46. Note that the first control signal Sy corresponds to the second thyristor SR2. The second control signal Sx corresponds to the first thyristor SR1.

To the first gate driver 46, error amounts (Δe_{ac.x} and Δe_{ac.y}) of the alternating-current voltage which are obtained from the first and second phase synchronization circuits 43a and 43b, together with the first and second control signals Sy and Sx, are input. To the first gate driver 46, the above-described first gate block signal (S_{GB}) is also input. The first gate driver 46 then outputs drive signals to turn ON and OFF the first and second thyristors SR1 and SR2 to them.

Here, the first gate driver 46 does not output the drive signals when the error amount (absolute value) of the alternating-current voltage e_{ac} is equal to or larger than a predetermined threshold value k. On the other hand, the first gate driver 46 outputs the drive signals when the error amount (absolute value) of the alternating-current voltage e_{ac} is smaller than the threshold value k. The threshold value k is a limit value at which the phase synchronization circuits 43a and 43b can function.

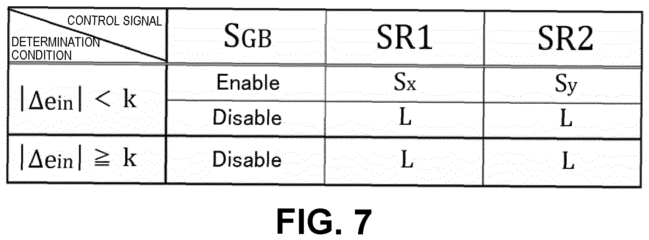

Specifically, a table related to control for turning ON and OFF the thyristors SR1 and SR2, which is illustrated in FIG. 7, is set in the controller 14. When the error amount (absolute value) of the alternating-current voltage e_{ac} in the normal phase or reverse phase is equal to or larger than the predetermined threshold value (|Δeiₙ| ≥ k), the alternating current i_{ac} becomes excessively large, and phase locking cannot be performed in each of the phase synchronization circuits 43a and 43b.

In such a case, when the thyristors SR1 or SR2 are turned ON or OFF, an excessively large inrush current might flow. In order to inhibit it, the controller 14 sets the first gate block signal (S_{GB}) to the disabling state. Then, the controller 14 outputs a predetermined control signal (L) which makes each of the thyristors SR1 and SR2 incapable of functioning. Consequently, the drive signal is not output.

On the other hand, when the error amount (absolute value) of the alternating-current voltage e_{ac} in the normal phase or reverse phase is smaller than the threshold value k (|Δeᵢₙ| < k), it is assessed that each of the phase synchronization circuits 43a and 43b is in the phase-locked state, and the phase angle of the commercial system voltage which is measured is output. The controller 14 evaluates the first gate block signal. Then, when the first gate block signal is in the enabling state, the first gate driver 46 outputs the drive signal based on the first control signal Sy, controls turning ON and OFF of the second thyristor SR2, outputs the drive signal based on the second control signal Sx, and controls turning ON and OFF of the first thyristor SR1.

In such a manner, the first and second control signals Sy and Sx for controlling turning ON and OFF of the two thyristors SR1 and SR2 can be obtained by the control block which is configured with simple logic. Hence, the first and second control signals Sy and Sx can inexpensively be realized by using an I/O pin of a commercially available control microcomputer.

### (Time Chart at Activation)

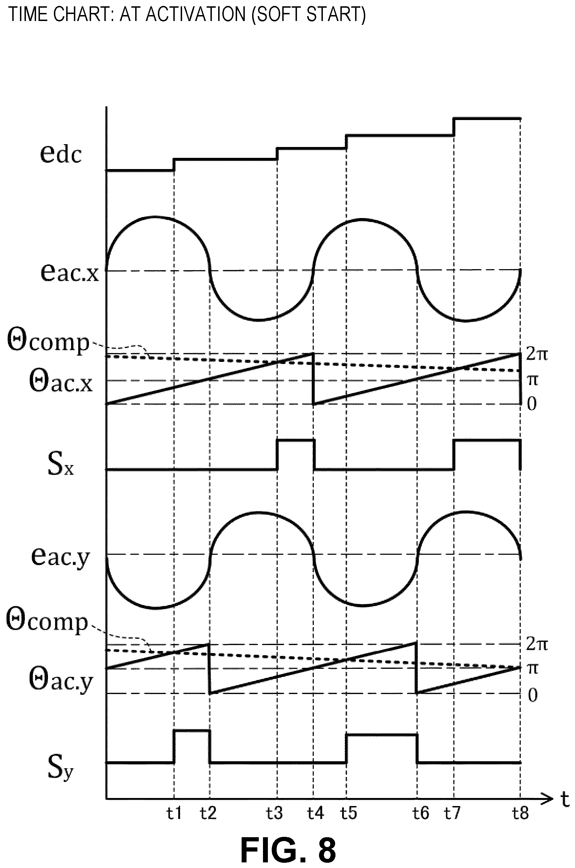

FIG. 8 illustrates, as an example, a time chart at activation in which the soft start is executed. The uppermost stage represents a change in the direct-current bus voltage e_{dc}. The phase angles θ_{ac.x} and θ_{ac.y} periodically change in a range of about 0 degree to about 360 degrees (2π). The first and second control signals Sy and Sx are turned OFF at the timing of about 0 degree (about 360 degrees). Specifically, the first control signal Sy is turned OFF at timings of t2 and t6, and the second control signal Sx is turned OFF at timings of t4 and t8.

Based on that, as described above, the comparison phase angle (θ_{comp}) is set in the range of about 180 degrees (π) or larger to about 360 degrees (2π) or smaller, and this is compared with the phase angles θ_{ac.x} and θ_{ac.y} in the first comparator 45a and the second comparator 45b. Accordingly, timings for turning ON the first and second control signals Sy and Sx are determined. Specifically, the first control signal Sy is turned ON at timings of t1 and t5, and the second control signal Sx is turned ON at timings of t3 and t7.

Consequently, the pulse width at a time when the first and second thyristors SR1 and SR2 are turned ON is adjusted. As a result, the direct-current bus voltage e_{dc} gradually increases, and the smoothing capacitor Coc is steadily charged. The soft start can appropriately be executed, and the inrush current can effectively be inhibited.

### (After Completion of Soft Start)

After completion of the soft start, the steady state is established as described above, where turning ON and OFF of the first and second thyristors SR1, SR2 are switched in accordance with the alternately repeated positive and negative half-cycles of the alternating-current voltage e_{ac}.

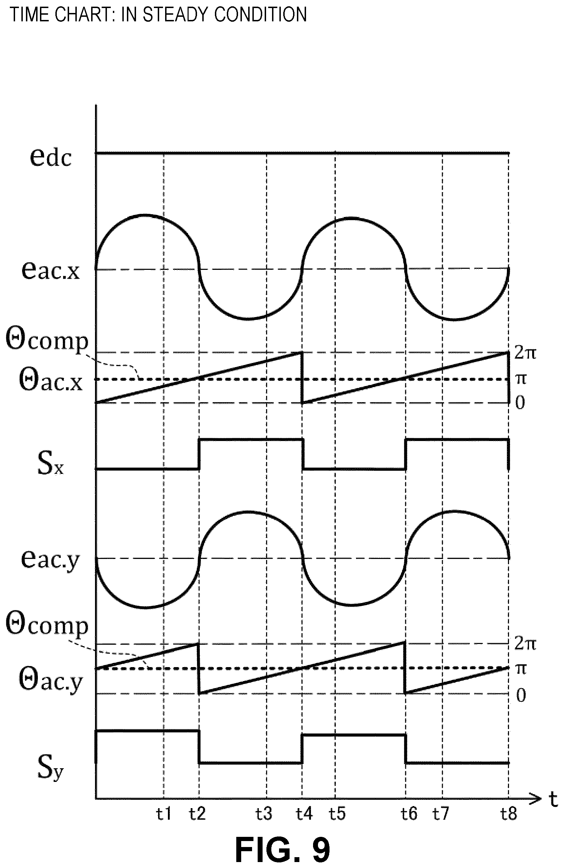

FIG. 9 illustrates a time chart related to control of the first and second thyristors SR1 and SR2 in the steady state. The comparison phase angle θ_{comp} of each of the first comparator 45a and the second comparator 45b is constant (about 180 degrees: π). The pulse widths at times when the first and second thyristors SR1 and SR2 are turned ON and OFF become the same magnitude, and turning ON and OFF of them are switched at each half cycle.

In response to that, the second gate block signal becomes the enabling state, and the functions of the two switching elements S1 and S2 become active. Then, PWM control is performed for the first and second switching elements S1 and S2, and the PFC circuit 20 executes its original control.

### (Control Block of PFC Circuit)

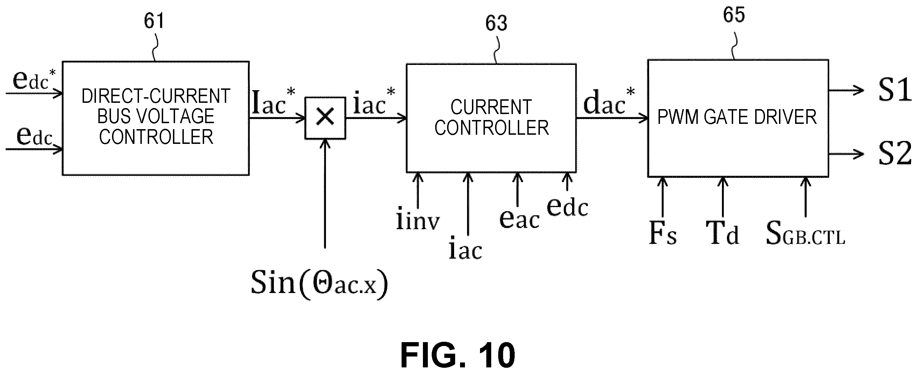

FIG. 10 illustrates a control block of the PFC circuit 20. In order to control the PFC circuit 20, the controller 14 has a direct-current bus voltage controller 61, a current controller 63, a second gate driver 65, and so forth.

The direct-current bus voltage command value e_{dc}* and the value of the direct-current bus voltage e_{dc}, which is detected by the output voltage sensor 12, are input to the direct-current bus voltage controller 61, and the direct-current bus voltage controller 61 outputs an alternating current command value l_{ac}*. An alternating current command value i_{ac}* is obtained by multiplying the alternating current command value l_{ac*} by Sin(θ_{ac.x}), and the alternating current command value i_{ac}* is input to the current controller 63.

To the current controller 63, the value of the alternating current i_{ac}, which is detected by the first and second current sensors, the value of the reactor current iᵢₙᵥ, and the values of the alternating-current voltage e_{ac} and the direct-current bus voltage e_{dc}, which are detected by the input voltage sensor 11 and the output voltage sensor 12, are also input. Then, the current controller 63 calculates a duty factor command value d_{ac}* based on those numerical values and outputs that to the second gate driver 65.

To the second gate driver 65, together with the duty factor command value d_{ac}*, a switching frequency Fₛ, a dead time T_{d}, and the second gate block signal (S_{GB.CTL}) are input. Then, the second gate driver 65 executes PWM control based on those numerical values and outputs the drive signals to turn ON and OFF the first and second switching elements S1 and S2 to them.

<Inspection of Effects by Simulation>

A simulation was performed for inspecting effects of the disclosed technique. In the simulation, the alternating-current voltage (active value) was set to about 240V at a frequency of about 60 Hz, and its total harmonic distortion factor (THDv) was set to about 14.3%.

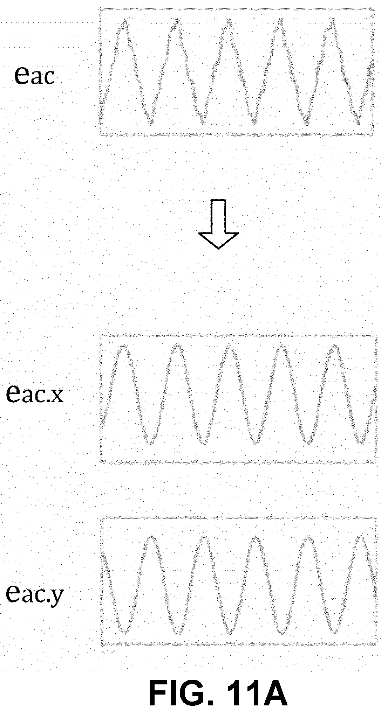

FIG. 11A illustrates the waveform of the alternating-current voltage e_{ac} and waveforms of alternating-current voltages e_{ac.x}and e_{ac.y} which result from processes by the first transfer function 41a and the second transfer function 41b. It was observed that the unprocessed alternating-current voltage e_{ac} had a distorted waveform (distorted wave) but waveforms with no distortion (sinusoidal waves) could be obtained for the alternating-current voltages e_{ac.x} and e_{ac.y} which resulted from the processes by the transfer functions 41a and 41b.

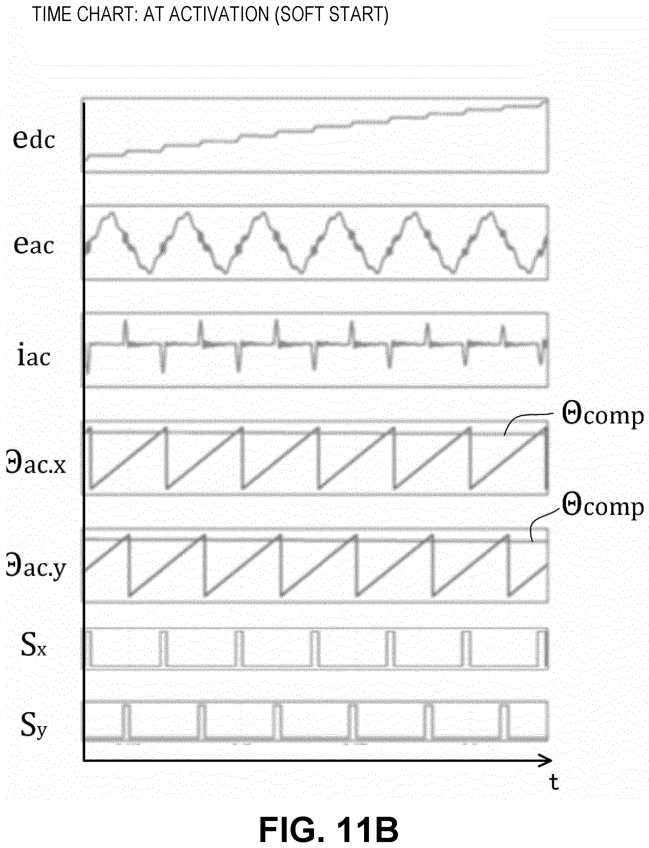

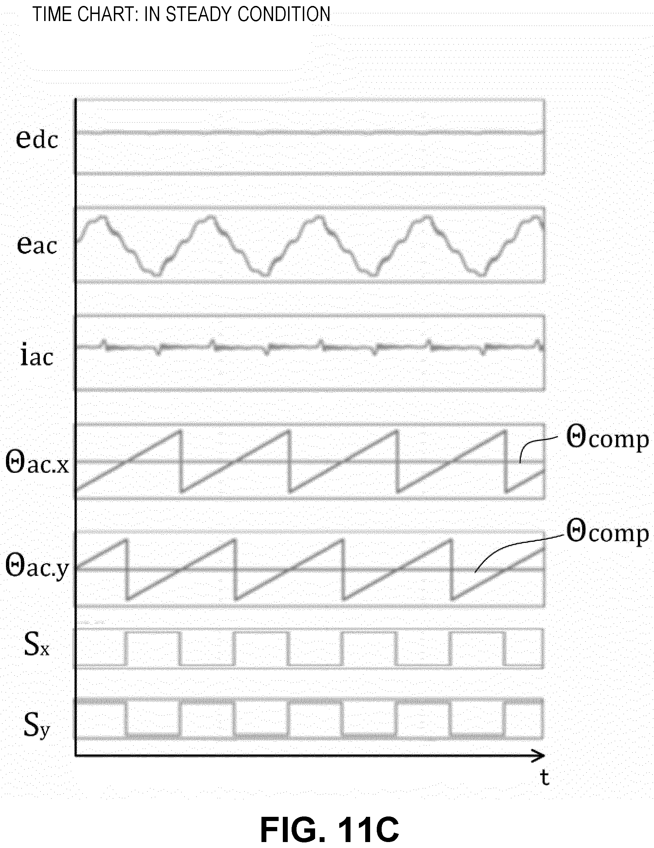

FIG. 11B and FIG. 11C illustrate time charts in activation and in the steady condition in the simulation, which correspond to FIG. 8 and FIG. 9. It was observed that even when the alternating-current voltage e_{ac} with a high distortion factor was input, the soft start could be performed by adjusting the timings when the first and second thyristors SR1 and SR2 were turned ON without hindrance, and precharge could be performed for the direct-current bus voltage e_{dc}. Accordingly, it was observed that a smooth transition to the steady state could be performed.

### <Other Form of AC/DC Converter>

In the above-described embodiment, in order to form sinusoidal waves in the normal phase and reverse phase with no distortion from the distorted alternating-current voltage e_{ac}, the first transfer function 41a and the second transfer function 41b are used for the respective phases (see FIG. 4). However, the second transfer function 41b which forms the sinusoidal wave in the normal phase may be omitted or simplified. Consequently, a control program can be simplified, and a processing load on the controller 14 can be reduced.

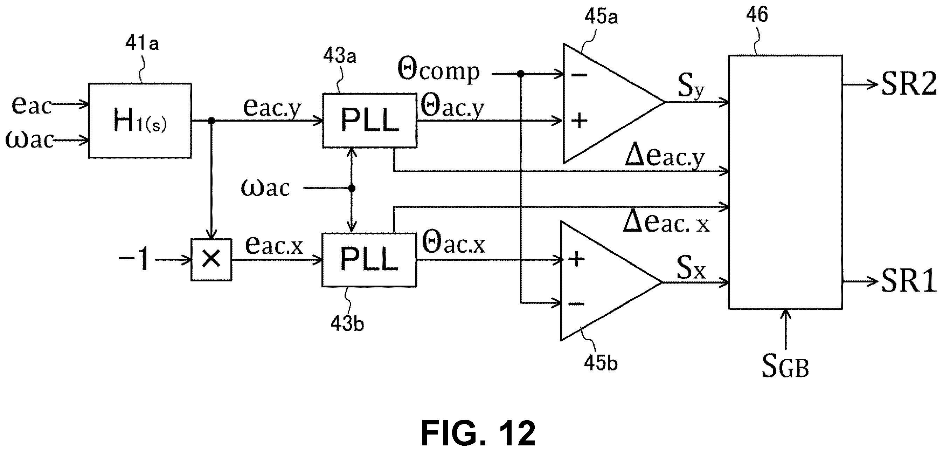

As illustrated in FIG. 12, the controller 14 in this other form has the first transfer function 41a which converts the distorted wave of the alternating-current voltage e_{ac} into a sinusoidal wave in the reverse phase. Furthermore, the first phase synchronization circuit 43a outputs the first phase angle θ_{ac.y} based on the signal e_{ac.y} of the alternating-current voltage in the reverse phase, which is obtained by the first transfer function 41a. This point is similar to the above-described embodiment.

On the other hand, the controller 14 in this other form does not have the second transfer function 41b. Instead, the controller 14 multiplies the signal e_{ac.y} of an alternating-current voltage formed with the sinusoidal wave in the reverse phase, which is output from the first transfer function 41a, by -1 and thereby inverts the signal. Consequently, the signal e_{ac.x} of the alternating-current voltage formed with the sinusoidal wave in the normal phase is formed and is input to the second phase synchronization circuit 43b.

Then, the second phase synchronization circuit 43b outputs the second phase angle θ_{ac.x} based on the signal e_{ac.x} of the alternating-current voltage in the normal phase. Other configurations of the control block are the same as those of the above-described embodiment.

### <Other Application Example of Disclosed Technique>

In the above-described embodiment, a case is described where the disclosed technique is applied to the AC/DC converter 6 including the single-phase PFC circuit 20. The disclosed technique can also be applied to a three-phase PFC circuit. In the following, this application example will be described. Note that because a basic circuit configuration is similar to that of the single-phase PFC circuit 20 of a bridge type and basic control actions are similar to those of the above-described embodiment, descriptions thereof will not be made.

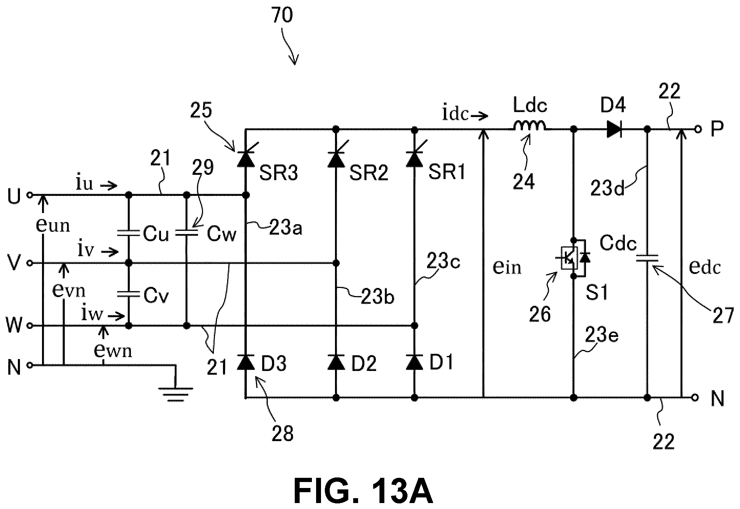

FIG. 13A illustrates, as an example, a three-phase PFC circuit 70 to which the disclosed technique is applied. The alternating-current voltage e_{ac} to be input to the AC/DC converter 6 is configured with three phases (U phase, V phase, and W phase) that are phases different from each other by about 120 degrees.

The PFC circuit 70 is configured with one reactor 24, three thyristors 25 (SR1, SR2, and SR3) including first, second, and third thyristors, four diodes 28 (D1 to D4) including first, second, third, and fourth diodes, one switching element 26 (S1), one smoothing capacitor 27 (C_{dc}), three relay capacitors 29 (Cᵤ, Cv, and C_{w}), and so forth.

Between a pair of pieces of direct-current output wiring 22 and 22, first to fifth relay wiring 23a to 23e are connected in parallel. As with the single-phase PFC circuit 20 of a bridge type, the reactor 24 (L_{dc}) is arranged in the direct-current output wiring 22 on a non-contact side. The smoothing capacitor C_{dc} is arranged in the fourth relay wiring 23d, and the switching element S1 is arranged in the fifth relay wiring 23e.

The alternating-current input wiring 21 is configured with three pieces of wiring, which correspond to the respective phases. At one end of their input side, input terminals (U terminal, V terminal, and W terminal) to which the respective phases of the alternating-current voltage e_{ac} are input are provided. The other ends, on the output side, of those pieces of alternating-current input wiring 21 are respectively connected with middle points of the first, second, and third relay wiring 23a, 23b, and 23c. The relay capacitors Cᵤ, Cᵥ, and C_{w} are respectively connected with portions between those pieces of alternating-current input wiring 21.

The three thyristors SR1, SR2, and SR3 respectively correspond to the phases and are arranged in the first to third relay wiring 23a to 23c. Turning ON and OFF of these thyristors SR1, SR2, and SR3 are switched in accordance with alternately repeated positive and negative half-cycles of alternating-current voltages eᵤₙ, eᵥₙ, and e_{wn} in the respective phases being input. Conducting directions of the first to third diodes D1 to D3 are respectively the same as conducting directions of the thyristors SR1, SR2, and SR3, and the first to third diodes D1 to D3 are connected in series with grounding sides of the thyristors SR1, SR2, and SR3.

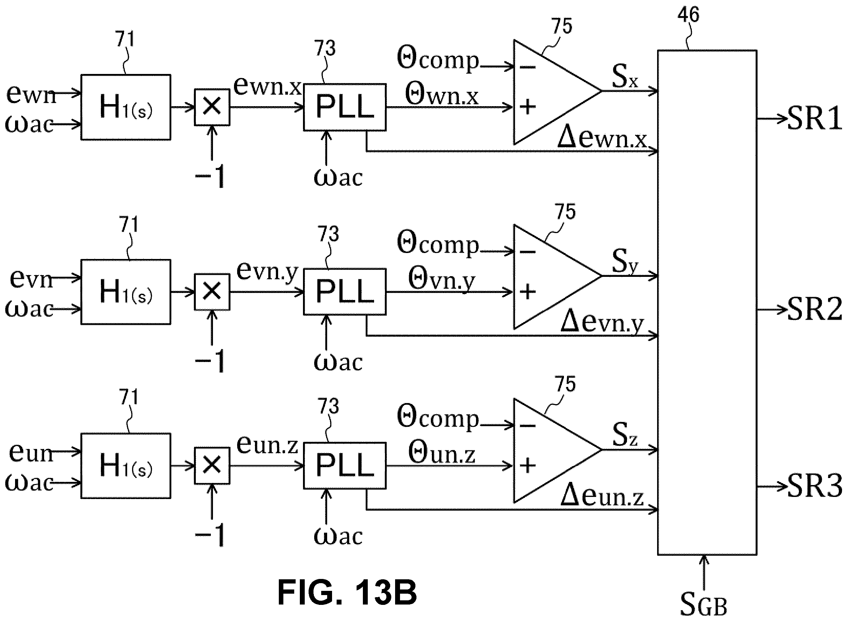

FIG. 13B illustrates, as an example, a control block concerning control of the thyristors SR1, SR2, and SR3, which is executed by the controller 14. For each of the three phases, the controller 14 has a control element formed of a transfer function 71, a phase synchronization circuit 73, and a comparator 75.

Functions of each of those control elements are the same except the point that the phases of the alternating-current voltages eᵤₙ, eᵥₙ, and e_{wn} to be input are different. Their control actions are the same as that of the control block which is illustrated in FIG. 12 and corresponds to the sinusoidal wave in the normal phase.

That is, the alternating-current voltages eᵤₙ, eᵥₙ, and e_{wn} in the respective phases and angular frequencies ω_{ac} of those alternating-current voltages are input to the respective control elements, and a process is executed by the transfer function 71 corresponding to the first transfer function 41a. Accordingly, alternating-current voltage signals formed with sinusoidal waves in the reverse phase can be obtained. By multiplying the alternating-current voltage signals by -1, those signals are inverted. Consequently, signals (e_{un.z}, e_{vn.y}, and e_{wn.x}) of the alternating-current voltages formed with the sinusoidal waves in the normal phase are formed and are input to the respective phase synchronization circuits 73.

Accordingly, because phase angles θ_{un.z}, θ_{vn.y}, and θ_{wn.x} are obtained for the respective phases, the respective comparators 75 compare those phase angles with the comparison phase angle θ_{comp} and output control signals Sx, Sy, and Sz, for the respective phases, to the first gate driver 46. To the first gate driver 46, error amounts (Δe_{un.z}, Δe_{vn.y}, and Δe_{wn.x}) of the alternating-current voltages, which are obtained from the respective phase synchronization circuits 73, and the first gate block signal (S_{GB}) are also input.

Then, based on those input signals, the first gate driver 46 outputs the drive signal to each of the first, second, and third thyristors SR1, SR2, and SR3 and controls tuning ON and OFF of the first to third thyristors SR1, SR2, and SR3.

Note that the disclosed technique is not limited to the above-described embodiment and also includes various configures other than that. For example, as a control scheme for a PFC circuit, average current mode control is common. Consequently, the disclosed technique can be applied to a PFC circuit which executes the average current mode control. The disclosed technique is not limited to this and may be applied to a PFC circuit which executes peak current mode control.

### [Reference Signs List]

- 1: vehicle
- 2: commercial power supply
- 3: vehicle-mounted charger
- 4: battery
- 5: DC/DC converter
- 6: AC/DC converter
- 10: current sensor
- 11: input voltage sensor
- 12: output voltage sensor
- 13: converter mechanism
- 14: controller
- 20: PFC circuit
- 21: alternating-current input wiring
- 22: direct-current output wiring
- 23a to 23e: relay wiring
- 24: reactor
- 25: thyristor
- 26: switching element
- 27: smoothing capacitor
- 28: diode
- 29: relay capacitor
- 41a: first transfer function
- 41b: second transfer function
- 43a: first phase synchronization circuit
- 43b: second phase synchronization circuit
- 45a: first comparator
- 45b: second comparator
- 46: first gate driver
- 51: transfer function
- 52: integration element
- 61: direct-current bus voltage controller
- 63: current controller
- 65: second gate driver

## Claims

1. An AC/DC converter (6) comprising a PFC circuit (20), wherein
the PFC circuit (20) includes:
one reactor (24);
two thyristors (25) including first and second thyristors (25) whose turning ON and OFF is switched in accordance with alternately repeated positive and negative half-cycles of an alternating-current voltage being input;
at least one switching element (26) that includes a diode and is turned ON and OFF to convert the alternating-current voltage into a predetermined direct-current voltage and to output the predetermined direct-current voltage; and
one capacitor (29) that is arranged between a pair of pieces of direct-current output wiring on an output side relative to the reactor (24), the thyristors (25), and the switching element (26),
the AC/DC converter (6) comprises a controller (14) which controls turning ON and OFF of the thyristors (25) and the switching element (26), and
when an input of the alternating-current voltage is started, with a function of the switching element (26) being made inactive, the controller (14) executes a soft start by adjusting a pulse width at a time when each of the thyristors (25) is turned ON by changing a timing when each of the thyristors (25) is turned ON based on a phase angle which is obtained by processing the alternating-current voltage by a predetermined phase synchronization circuit.

2. The AC/DC converter (6) according to claim 1, wherein
the phase synchronization circuit is configured with:
a first phase synchronization circuit (43a) corresponding to a reverse phase of the alternating-current voltage; and
a second phase synchronization circuit (43b) corresponding to a normal phase of the alternating-current voltage, and
the controller (14) includes:
a first comparator (45a) that compares a first phase angle which is output from the first phase synchronization circuit (43a) with a comparison phase angle which is set in advance for execution of the soft start, and that outputs a first control signal; and
a second comparator (45b) that compares a second phase angle which is output from the second phase synchronization circuit (43b) with the comparison phase angle and that outputs a second control signal, and
the controller (14) controls turning ON and OFF of the second thyristor (25) based on the first control signal, and controls turning ON and OFF of the first thyristor (25) based on the second control signal.

3. The AC/DC converter (6) according to claim 2, wherein
the controller (14) includes:
a first transfer function (41a) that converts a distorted wave of the alternating-current voltage into a sinusoidal wave in the reverse phase; and
a second transfer function (41b) that converts the distorted wave of the alternating-current voltage into a sinusoidal wave in the normal phase,
the first phase synchronization circuit (43a) outputs the first phase angle based on a reverse-phase alternating-current voltage which is obtained by the first transfer function (41a), and the second phase synchronization circuit (43b) outputs the second phase angle based on a normal-phase alternating-current voltage which is obtained by the second transfer function (41b).

4. The AC/DC converter (6) according to claim 2, wherein
the controller (14) includes a first transfer function (41a) that converts a distorted wave of the alternating-current voltage into a sinusoidal wave in the reverse phase,
the first phase synchronization circuit (43a) outputs the first phase angle based on a reverse-phase alternating-current voltage which is obtained by the first transfer function (41a), and the second phase synchronization circuit (43b) outputs the second phase angle based on a normal-phase alternating-current voltage which is obtained by inverting the reverse-phase alternating-current voltage obtained by the first transfer function (41a).

5. The AC/DC converter (6) according to any one of the preceding claims, wherein
the alternating-current voltage is configured with three phases that are different phases,
the PFC circuit (20) includes:
the reactor (24);
three thyristors (25) including first, second, and third thyristors whose turning ON and OFF is switched in accordance with alternately repeated positive and negative half-cycles of the alternating-current voltage in the respective phases being input;
three diodes (28) including first, second, and third diodes that are connected in series with the respective thyristors (25), with conducting directions of the diodes (28) being the same as conducting directions of the respective thyristors (25);
the switching element (26); and
the capacitor (29) that is arranged between a pair of pieces of direct-current output wiring on an output side relative to the reactor (24), the thyristors (25), the diodes (28), and the switching element (26), and
the controller (14) includes:
three phase synchronization circuits that correspond to the alternating-current voltage in the respective phases; and
three comparators that are provided for the respective phases so as to compare phase angles which are output from the respective phase synchronization circuits with the comparison phase angle which is set in advance for execution of the soft start, and to output control signals, and
the controller (14) controls turning ON and OFF of the first to third thyristors (25) based on the control signals for the respective phases.

6. The AC/DC converter (6) according to claim 2 or 5, wherein
the controller (14) includes a gate driver (46) to which an error amount of the alternating-current voltage obtained from the phase synchronization circuit is input together with the control signal and which outputs a drive signal to turn ON or OFF each of the thyristors (25), and
the gate driver (46) does not output the drive signal when an absolute value of the error amount of the alternating-current voltage is equal to or larger than a predetermined threshold value and outputs the drive signal when the absolute value of the error amount of the alternating-current voltage is smaller than the threshold value.

7. The AC/DC converter (6) according to any one of the preceeding claims, wherein the diode is a freewheel diode.

8. A method of controlling an AC/DC converter (6) comprising a PFC circuit (20), wherein
the PFC circuit (20) includes:
one reactor (24);
two thyristors (25) including first and second thyristors (25) whose turning ON and OFF is switched in accordance with alternately repeated positive and negative half-cycles of an alternating-current voltage being input;
at least one switching element (26) that includes a diode and is turned ON and OFF to convert the alternating-current voltage into a predetermined direct-current voltage and to output the predetermined direct-current voltage; and
one capacitor (29) that is arranged between a pair of pieces of direct-current output wiring on an output side relative to the reactor (24), the thyristors (25) , and the switching element (26),
the method comprising turning ON and OFF the thyristors (25) and the switching element (26), and
when an input of the alternating-current voltage is started, with a function of the switching element (26) being made inactive, the method executes a soft start by adjusting a pulse width at a time when each of the thyristors (25) is turned ON by changing a timing when each of the thyristors (25) is turned ON based on a phase angle which is obtained by processing the alternating-current voltage by a predetermined phase synchronization circuit.

9. The method of controlling an AC/DC converter (6) according to claim 8, wherein
the phase synchronization circuit is configured with:
a first phase synchronization circuit (43a) corresponding to a reverse phase of the alternating-current voltage; and
a second phase synchronization circuit (43b) corresponding to a normal phase of the alternating-current voltage, and
the method includes:
comparing a first phase angle which is output from the first phase synchronization circuit (43a) with a comparison phase angle which is set in advance for execution of the soft start, and that outputs a first control signal; and
comparing a second phase angle which is output from the second phase synchronization circuit (43b) with the comparison phase angle and that outputs a second control signal, and
controlling turning ON and OFF the second thyristor (25) based on the first control signal, and controlling turning ON and OFF the first thyristor (25) based on the second control signal.

10. The method of controlling an AC/DC converter (6) according to claim 9, wherein the method further includes:
converting a distorted wave of the alternating-current voltage into a sinusoidal wave in the reverse phase; and
converting the distorted wave of the alternating-current voltage into a sinusoidal wave in the normal phase,
wherein the first phase synchronization circuit (43a) outputs the first phase angle based on a reverse-phase alternating-current voltage which is obtained by converting a distorted wave of the alternating-current voltage into a sinusoidal wave in the reverse phase, and the second phase synchronization circuit (43b) outputs the second phase angle based on a normal-phase alternating-current voltage which is obtained by converting the distorted wave of the alternating-current voltage into a sinusoidal wave in the normal phase.

11. The method of controlling an AC/DC converter (6) according to claim 9, wherein the method further includes converting a distorted wave of the alternating-current voltage into a sinusoidal wave in the reverse phase,
wherein the first phase synchronization circuit (43a) outputs the first phase angle based on a reverse-phase alternating-current voltage which is obtained by converting a distorted wave of the alternating-current voltage into a sinusoidal wave in the reverse phase, and the second phase synchronization circuit (43b) outputs the second phase angle based on a normal-phase alternating-current voltage which is obtained by inverting the reverse-phase alternating-current voltage obtained by converting a distorted wave of the alternating-current voltage into a sinusoidal wave in the reverse phase.

12. The method of controlling an AC/DC converter (6) according to any one of the preceeding claims 8 to 11, wherein the diode is formed as a freewheel diode.

13. A computer program product which, when loaded on a suitable system, can perform the steps of any one of the above mentioned methods of claims 8 to 12.
